# EUROPEAN PATENT APPLICATION

(11) **EP 2 455 794 A1**
(43) Date of publication of application: **23.05.2012**
(21) Application number: 10799748.8
(22) Date of filing: 05.07.2010
(51) Int. Cl.: G02B 7/04, H02K 33/02

(54) **DRIVE MODULE AND ELECTRONIC DEVICE**

(30) Priority: 14.07.2009 JP 2009165840; 25.02.2010 JP 2010041063
(71) Applicant: Seiko Instruments Inc., Chiba-shi Chiba 261-8507 (JP)
(72) Inventor: KOTANAGI, Susumu, Chiba-shi Chiba 261-8507 (JP); TSUCHIYA, Tadashi, Chiba-shi Chiba 261-8507 (JP)
(74) Representative: Cloughley, Peter Andrew
(86) International application number: PCT/JP2010/061386
(87) International publication number: WO 2011/007689

(57) **Abstract**

A drive module includes: a lower plate spring 7 which is connected to an end surface of a lens frame 4 and an end surface of a module frame 5 arranged in a -Z direction; and a module lower plate 8 which is arranged on a -Z side of the lower plate spring 7 and restricts the movement of the lens frame 4 and the lower plate spring 7 in the Z direction. An intermediate member 80 is arranged between the lower plate spring 7 and the module lower plate 8. To set hardness of the intermediate member 80 closer to hardness of the lower plate spring 7 than hardness of the module lower plate 8 is, the module lower plate 8 is made of a resin material and the lower plate spring 7 and the intermediate member 80 are made of a metallic material.

## Description

### Technical Field

The present invention relates to a drive module which can be suitably used as an actuator which performs the focal position adjustment by driving, for example, an optical system or driving a movable member, and an electronic apparatus.

### Background Art

Conventionally, with respect to a miniaturized electronic apparatus such as a mobile phone provided with a camera function, to drive a driven body such as an imaging lens unit, there has been proposed various drive modules which drive the driven body by making use of the extension and shrinkage of a shape memory alloy wire (see patent document 1, for example).

Fig. 18 is an explanatory view showing a drive module disclosed in patent document 1, and is also a cross-sectional view of a portion taken along a line B-B in Fig. 4. As shown in Fig. 18(b), the drive module disclosed in patent document 1 includes a cylindrical lens frame (driven body) 4 which holds a lens unit, a cylindrical module frame (support body) 5 which houses the lens frame 4 inside thereof, and a lower plate spring 7 which is connected to an end surface of the lens frame 4 and an end surface of the module frame 5 arranged in the -Z direction and resiliently holds the lens frame 4 in a state where the lens frame 4 is movable in the Z direction relative to the module frame 5. An upper plate spring 6 is connected to an end surface of the lens frame 4 and an end surface of the module frame 5 in the +Z direction. The drive module also includes a drive means (not shown in the drawing) which moves the lens frame 4 in the Z direction (first direction). The drive module further includes a module lower plate 8 (restricting member) which restricts the movement of the lens frame 4 and the lower plate spring 7 in the -Z direction.

Here, the lower plate spring 7 is made of a metallic material, and the module lower plate 8 is made of a resin material.

### Prior Art Document

### Patent Document

Patent Document 1: JP-A-2009-134292

### Summary of the Invention

### Problems that the Invention is to Solve

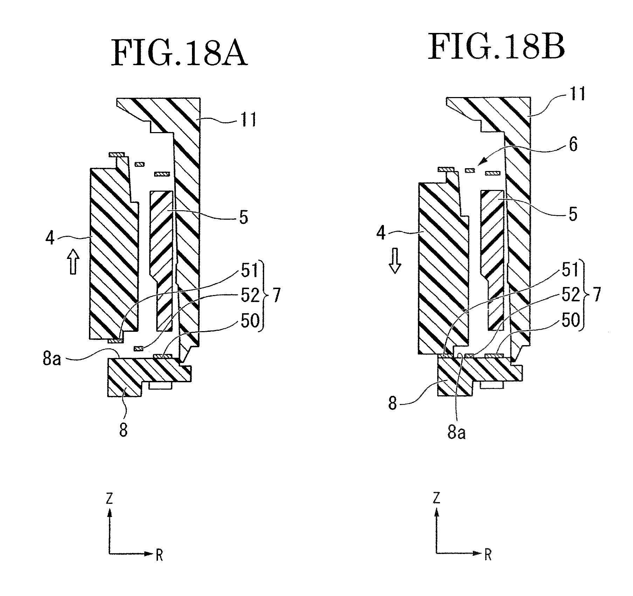

When an electronic apparatus falls or the like, an impact force acts on the drive module. When the impact force acts in the Z direction, as shown in Fig. 18(a), the lens frame 4 moves in the +Z direction. Thereafter, when a restoring force acts on the lens frame 4, as shown in Fig. 18(b), the lens frame 4 moves in the -Z direction so that the lower plate spring 7 impinges on the module lower plate 8. Here, the lower plate spring 7 made of a hard metallic material impinges on the module lower plate 8 made of a soft resin material and hence, there exists a drawback that the lower plate spring 7 shaves the module lower plate 8 thus forming shaving debris. Because of this shaving debris, quality of an image picked up by a camera which is an electronic apparatus is lowered or a smooth operation of the drive module is obstructed.

Further, when the lens frame 4 and the lower plate spring 7 impinge on the module lower plate 8 in an inclined state, there arises a drawback that the stress concentration occurs so that the module lower plate 8 is plastically deformed. In this case, when the lens frame 4 is brought into indirect contact with a surface 8a of the module lower plate 8, a stationary position of the lens frame 4 is displaced or is inclined.

The present invention has been made in view of the above-mentioned drawbacks, and it is an object of the present invention to provide a drive module and an electronic apparatus which can suppress the generation of shaving debris inside thereof and can suppress a change in a stationary position of a driven body.

### Means for Solving the Problem

To overcome the above-mentioned drawbacks, a drive module of the present invention includes: a cylindrical or columnar driven body; a cylindrical support body which houses the driven body inside thereof; a plate spring member which is connected to an end surface of the driven body and an end surface of the support body arranged in a first direction, and resiliently holds the driven body in a state where the driven body is movable along the first direction relative to the support body; a drive means which moves the driven body along the first direction; and a restricting member which is arranged on a side opposite to the driven body with the plate spring member sandwiched therebetween, and restricts the movement of the driven body and the plate spring member along the first direction, wherein an intermediate member is arranged between the plate spring member and the restricting member, and the intermediate member is formed such that hardness of the intermediate member is set closer to hardness of the plate spring member than hardness of the restricting member is.

Hardness of each member can be defined in accordance with Rockwell hardness stipulated in Japanese Industrial Standards (JIS) G0202.

In this invention, the intermediate member is arranged between the plate spring member and the restricting member and hence, when an impact force acts in the first direction of the drive module so that the driven body moves in the first direction, the plate spring member impinges on the intermediate member. According to the present invention, the intermediate member is formed such that the hardness of the intermediate member is set closer to the hardness of the plate spring member than the hardness of the restricting member is so that the difference in hardness between the plate spring member and the intermediate member is set small and hence, even when the plate spring member impinges on the intermediate member, there is almost no possibility that the plate spring member shaves the intermediate member. Accordingly, the generation of shaving debris can be suppressed.

Further, the difference in hardness between the plate spring member and the intermediate member is set small and hence, even when the plate spring member impinges on the intermediate member together with the driven body in an inclined state, a plastic deformation amount of the intermediate member can be small. Accordingly, a change in a stationary position of the driven body when the driven body is brought into indirect contact with the restricting member can be suppressed.

Further, it is desirable that the restricting member is made of a resin material, and the plate spring member and the intermediate member are made of the same metallic material.

In this case, the plate spring member and the intermediate member are made of the same metallic material and hence, even when the plate spring member impinges on the intermediate member, there is no possibility that the intermediate member is shaved by the plate spring member. Accordingly, the generation of shaving debris can be prevented. Further, the plastic deformation of the intermediate member can be also prevented and hence, a change in a stationary position of the driven body when the driven body is brought into indirect contact with the restricting member can be prevented.

The restricting member made of the resin material has a drawback that an edge of the restricting member is liable to be caught by an object around the restricting member so that the edge is easily shaved. According to the present invention, the intermediate member made of a metallic material is adopted and hence, even when the restricting member impinges on the plate spring member made of a metallic material, both members slide each other whereby the intermediate member is hardly shaved. Even when the intermediate member is shaved, shaving debris hardly falls compared to a case where the intermediate member is made of a resin. Accordingly, the generation of shaving debris can be prevented.

Further, it is desirable that the intermediate member is arranged inside of a sunken portion formed in the restricting member.

In this case, even when the intermediate member is adopted, large sizing of the drive module can be obviated.

Further, it is desirable that a depth of the sunken portion in the first direction is set equal to or more than a thickness of the intermediate member in the first direction.

In this case, the intermediate member is arranged inside the restricting member and hence, the plate spring member is brought into contact with a surface of the restricting member in the first direction. Accordingly, even when the intermediate member is adopted, accuracy in height size of the drive module can be ensured.

Further, it is desirable that the support body includes a positioning pin which is fitted into a positioning hole formed in the plate spring member and a positioning hole formed in the restricting member, and the intermediate member has a positioning hole into which the positioning pin is fitted.

In this case, positioning of the intermediate member with respect to the support body can be performed in the same manner as the plate spring member and the restricting member and hence, the accuracy in relative position among the support body, the plate spring member, the intermediate member and the restricting member can be ensured.

Further, it is desirable that a thickness of the intermediate member in the first direction is set larger than a thickness of the plate spring member in the first direction.

When an impact force acts in a second direction which intersects with the first direction, the driven body moves in the second direction. Here, the intermediate member is arranged between the plate spring member and the restricting member and hence, an outer peripheral side of a first connecting portion of the plate spring member connected to the driven body is brought into contact with an inner peripheral side of an opening portion of the intermediate member. In the present invention, the difference in hardness between the plate spring member and the intermediate member is set small and hence, even when the first connecting portion of the plate spring member is brought into contact with the intermediate member, there is no possibility that the first connecting portion cuts into the intermediate member. Accordingly, in a process where the driven body returns to a state before the impact force acts, the first connecting portion moves while sliding on a surface of the intermediate member. In this manner, plastic deformation of the first connecting portion of the plate spring member can be prevented. Accordingly, the plate spring member can also return to a state before the impact force acts together with the driven body and hence, a change in a stationary position of the driven body can be prevented.

Another drive module according to the present invention includes: a cylindrical or columnar driven body; a cylindrical support body which houses the driven body inside thereof; a plate spring member which is connected to an end surface of the driven body and an end surface of the support body arranged in a first direction, and resiliently holds the driven body in a state where the driven body is movable along the first direction relative to the support body; a drive means which moves the driven body along the first direction; and a restricting member which is arranged on a side opposite to the driven body with the plate spring member sandwiched therebetween, and restricts the movement of the driven body and the plate spring member along the first direction, wherein the plate spring member comprises: a first connecting portion which is connected to an end surface of the driven body; a second connecting portion which is arranged outside the first connecting portion in a radial direction and is connected to an end surface of the support body; and a plurality of spring portions which connect the first connecting portion and the second connecting portion to each other, a projection capable of coming into contact with the restricting member is formed upright on the end surface of the driven body in the first direction, and the projection is formed such that hardness of the projection is set closer to hardness of the restricting member than hardness of the plate spring member is.

In this invention, the projection capable of coming into contact with the restricting member is formed upright on the end surface of the driven body in the first direction and hence, when an impact force acts in the first direction of the drive module so that the driven body moves in the first direction, the projection impinges on the restricting member. According to the present invention, the projection is formed such that the hardness of the projection is set closer to the hardness of the restricting member than the hardness of the plate spring member is so that the difference in hardness between the projection and the restricting member is set small and hence, even when the projection impinges on the restricting member, there is almost no possibility that the restricting member is shaved. Accordingly, the generation of shaving debris can be suppressed.

Further, the difference in hardness between the projection and the restricting member is set small and hence, even when the projection impinges on the restricting member in an inclined state, a plastic deformation amount of the restricting member can be small. Accordingly, a change in a stationary position of the driven body when the driven body is brought into direct or indirect contact with the restricting member can be suppressed.

Further, it is desirable that the plate spring member is made of a metallic material, and the restricting member and the projection are made of a resin material.

In this case, the projection and the restricting member are made of the same resin material and hence, even when the projection impinges on the restricting member, there is no possibility that the restricting member is shaved. Accordingly, the generation of shaving debris can be prevented. Further, the plastic deformation of the restricting member can be also prevented and hence, a change in a stationary position of the driven body can be prevented.

Further, it is desirable that a height of the projection in the first direction is set larger than a thickness of the plate spring member in the first direction.

In this case, only the projection impinges on the restricting member and the first connecting portion of the plate spring member does not impinge on the restricting member and hence, the generation of shaving debris can be prevented. Further, a plastic deformation amount of the restricting member can also be small and hence, it is possible to prevent a change in a stationary position of the driven body.

An electronic apparatus of the present invention includes the above-mentioned drive module.

According to the present invention, the electronic apparatus is provided with the drive module which can suppress the generation of shaving debris inside thereof and can suppress a change in a stationary position of the driven body and hence, it is possible to provide the drive module exhibiting excellent quality and reliability.

### Advantageous Effect of the Invention

According to the drive module of the present invention, the intermediate member is arranged between the plate spring member and the restricting member and hence, when an impact force acts in the first direction of the drive module so that the driven body moves in the first direction, the plate spring member impinges on an intermediate member. According to the present invention, the intermediate member is formed such that the hardness of the intermediate member is set closer to the hardness of the plate spring member than the hardness of the restricting member is so that the difference in hardness between the plate spring member and the intermediate member is set small and hence, even when the plate spring member impinges on the intermediate member, there is almost no possibility that the intermediate member is shaved by the plate spring member. Accordingly, the generation of shaving debris can be suppressed. Further, the difference in hardness between the plate spring member and the intermediate member is set small and hence, even when the plate spring members impinge on the intermediate member together with the driven member in an inclined state, a plastic deformation amount of the intermediate member can be small. Accordingly, a change in a stationary position of the driven body when the driven body is brought into direct or indirect contact with the restricting member can be suppressed.

### Brief Description of the Drawings

Fig. 1 is a perspective view of an appearance of a drive module 1.
Fig. 2 is an exploded perspective view showing the schematic constitution of the drive module 1.
Fig. 3 is an exploded perspective view showing the schematic constitution of a drive unit 31.
Fig. 4 is a perspective view of an appearance of the drive unit 31.
Fig. 5 is a cross-sectional view taken along a line A-A in Fig. 4.
Fig. 6 is a plan view of an upper plate spring 6 (lower plate spring 7).
Fig. 7 is a perspective view of a module lower plate 8 and an intermediate member 80.
Fig. 8 is a plan view showing a state where the intermediate member 80 and the module lower plate 8 overlap with each other.
Fig. 9 is an explanatory view of the manner of operation of the drive module according to a first embodiment.
Fig. 10 is an explanatory view of the manner of operation of the drive module according to the first embodiment.
Fig. 11 is an exploded perspective view of a lens frame 104, a lower plate spring 107 and a module lower plate 108.
Fig. 12 is a perspective view showing a state where the lower plate spring 107 is mounted on the lens frame 104 and a module frame 5 as viewed from below.
Fig. 13 is a plan view showing a state where the lower plate spring 107 and the module lower plate 108 overlap with each other.
Fig. 14(a) is a cross-sectional view taken along a line C-C in Fig. 11, and Fig. 14(b) is a cross-sectional view taken along a line D-D in Fig. 11.
Fig. 15 is an explanatory view of the manner of operation of a drive module according to a second embodiment.
Fig. 16 is an explanatory view of the manner of operation of the drive module according to the second embodiment.
Fig. 17 is an explanatory view of a mobile phone 20 provided with a camera.
Fig. 18 is an explanatory view of a drive module described in patent document 1.
Fig. 19 is an explanatory view of the drive module described in patent document 1.
Fig. 20 is a perspective view of a cover 11 and an upper intermediate member 90.
Fig. 21 is a bottom view of the cover 11 and the upper intermediate member 90.
Fig. 22 is an explanatory view of the manner of operation of a drive module according to a third embodiment.

### Mode for Carrying out the Invention

### (Drive module)

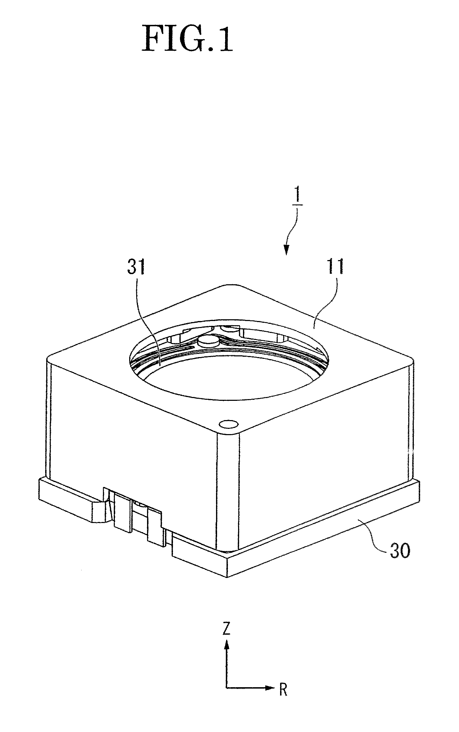

Hereinafter, one embodiment of a drive module according to the present invention is explained in conjunction with Fig. 1 to Fig. 9. In this embodiment, the explanation is made by taking a drive module for an imaging lens unit of a camera as an example. Further, as an example of an actuator for driving the lens unit, the explanation is made by taking a case where a shape memory alloy wire is used as an example. In the respective drawings used hereinafter, there may be a case where an axial direction of the lens unit is referred to as the Z direction, and the radial direction of the lens unit is referred to as the R direction.

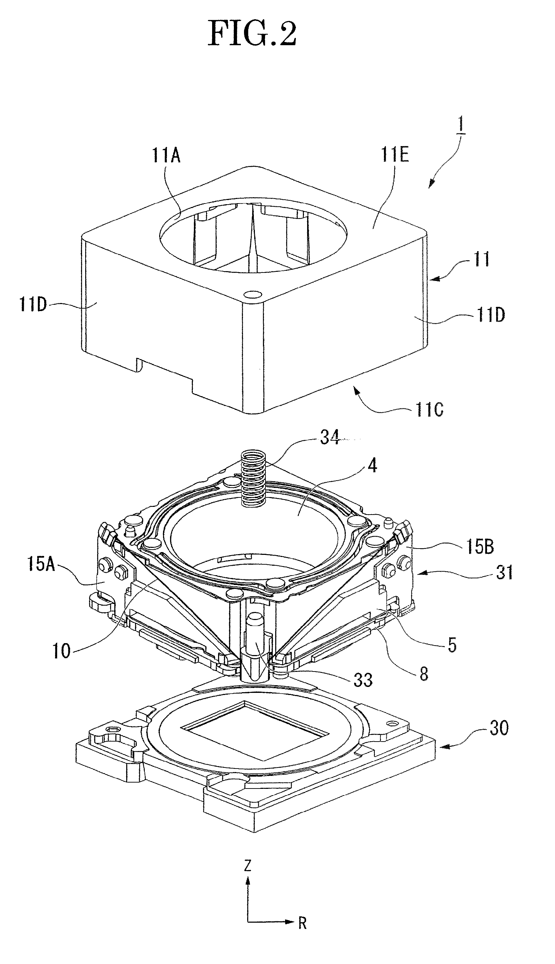

Fig. 1 is a perspective view showing an appearance of a drive module 1. Fig. 2 is an exploded perspective view showing the schematic constitution of the drive module 1. As shown in Fig. 1 and Fig. 2, the drive module 1 of this embodiment is formed into a box shape as a whole.

The drive module 1 is, after the assembling of the drive module 1 is finished, mounted on an electronic apparatus or the like in a state where the drive module 1 is fixed to a printed circuit board which supplies control signals and electricity to the drive module 1. The drive module 1 includes an adaptor 30 which is fixed to the printed circuit board, a drive unit 31 which is arranged on the adaptor 30, and a cover 11 which is arranged so as to cover the drive unit 31.

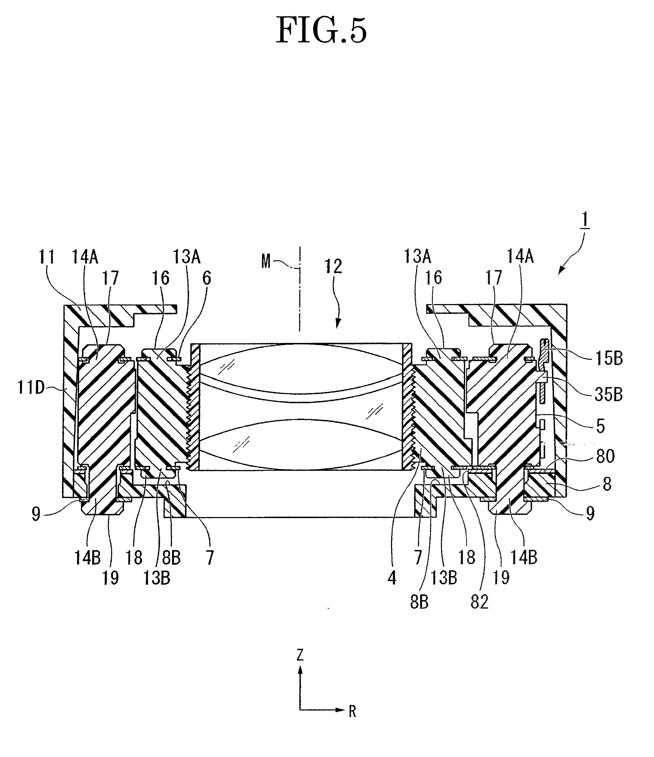

The cover 11 is a member where a side wall portion 11 D which covers a module frame 5 in a state where the side wall portion 11 D is fitted on the module frame 5 extends downward from an outer edge portion of an upper surface 11E thereof, and a rectangular opening 11C is formed in a lower side of the cover 11. A circular opening 11A having the center thereof at an axis M is formed in a center portion of the upper surface 11E. A size of the opening 11A is set to a size which allows the insertion and the removal of a lens unit 12 (see Fig. 5) into and out from the cover 11 therethrough.

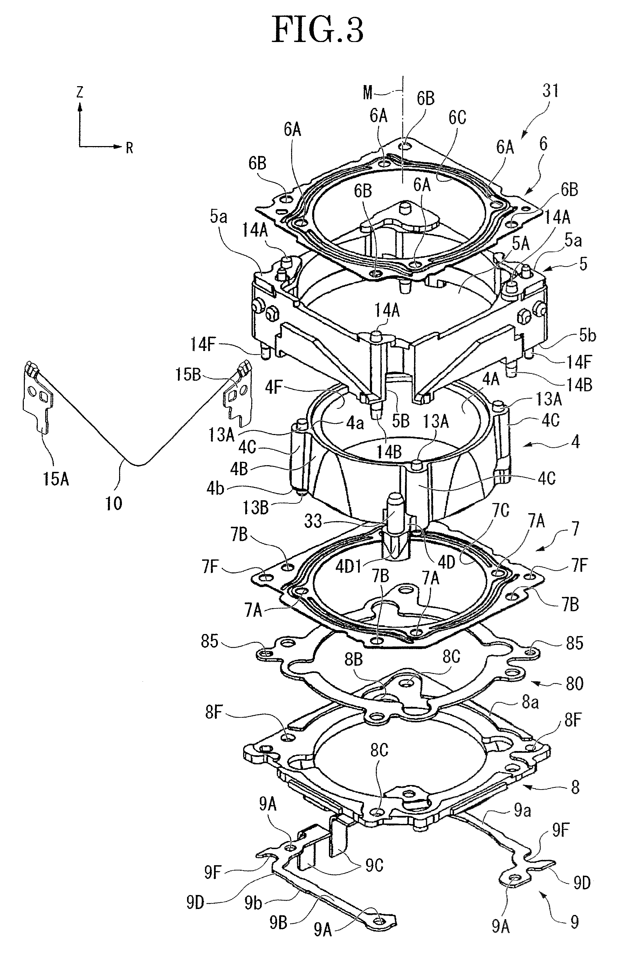

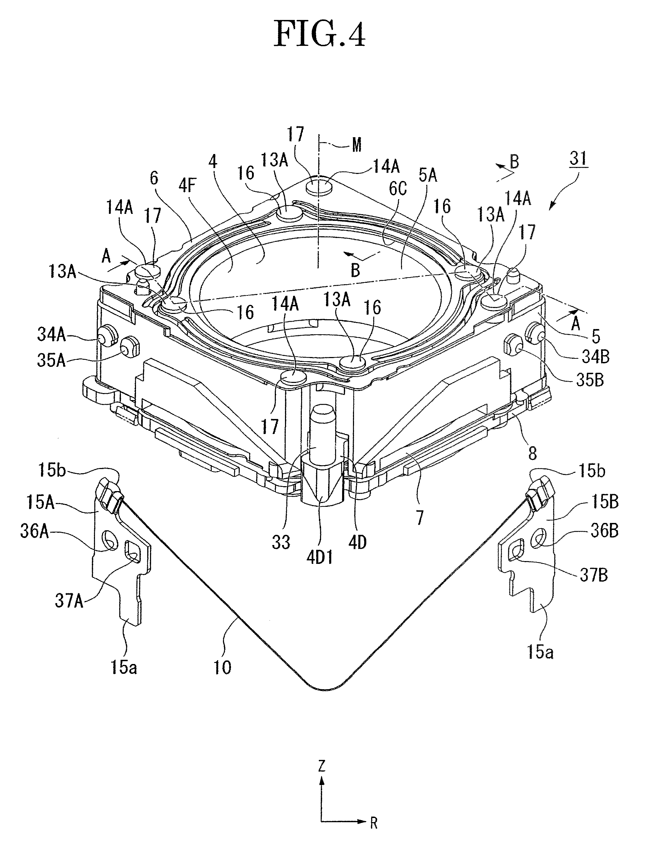

Fig. 3 is an exploded perspective view showing the schematic constitution of the drive unit 31. Fig. 4 is a perspective view showing an appearance of the drive unit 31. Fig. 5 is a cross-sectional view taken along a line A-A in Fig. 4. In some drawings, for facilitating the understanding of the constitution, some constitutional members are omitted when appropriate.

The drive unit 31 includes a cylindrical lens frame (driven body) 4 which holds the lens unit, the cylindrical module frame (support body) 5 which houses the lens frame 4 therein, an upper plate spring 6 which is connected to an end surface of the lens frame 4 and an end surface of the module frame 5 arranged in the +Z direction, and a lower plate spring 7 which is connected to an end surface of the lens frame 4 and an end surface of the module frame 5 arranged in the -Z direction, wherein the upper plate spring 6 and the lower plate spring 7 are provided for resiliently holding the lens frame 4 in a state where the lens frame 4 is movable in the Z direction relative to the module frame 5.

Returning to Fig. 2, the drive unit 31 includes a drive means which moves the lens frame 4 in the Z direction (first direction). As the drive means, a coil spring 34 which biases the lens frame 4 in the -Z direction and an actuator which moves the lens frame 4 in the +Z direction against a biasing force of the coil spring 34 are provided. As the actuator, a shape memory alloy (hereinafter, abbreviated as SMA) wire 10, wire holding members 15A, 15B which fix the SMA wire 10 to the module frame 5, and a electricity supply member 9 (see Fig. 3) which supplies electricity to the SMA wire 10 through the wire holding members 15A, 15B are provided. Here, a terminal portion 9C of the electricity supply member 9 is hidden on a back surface side of the drive unit 31 in Fig. 2 and Fig. 4.

The drive module includes also a module lower plate 8 (restricting member) which restricts the movement of the lens frame 4 and the lower plate spring 7 in the -Z direction.

As shown in Fig. 3 to Fig. 5, in an assembled state, the lens frame 4 is inserted into the inside of the module frame 5. The upper plate spring 6 is arranged above the lens frame 4 and the module frame 5, while the lower plate spring 7 is arranged below the lens frame 4 and the module frame 5 respectively. The upper plate spring 6 and the lower plate spring 7 are fixed to the lens frame 4 and the module frame 5 by caulking in a state where the upper plate spring 6 and the lower plate spring 7 sandwich the lens frame 4 and the module frame 5 therebetween in the vertical direction. The module lower plate 8 and the electricity supply member 9 are stacked to these members from below in this order, and are fixed to these members by caulking from below the module frame 5. The cover 11 which covers a stacked body from above is fixed to the module lower plate 8.

In the drawing, symbol M indicates the axis of the drive module 1 which agrees with an optical axis of the lens unit 12, and indicates the driving direction of the lens frame 4. Hereinafter, also in the explanation of the respective constitutional parts in a disassembled state, there may be cases where positions and directions of the respective constitutional parts are referred based on positional relationships with the axis M in an assembled state. For example, even when the constitutional part has neither clear circle nor a cylindrical surface, so long as there is no possibility of being misunderstood, there may be a case where the direction along the axis M is simply referred to as the axial direction or the Z direction, the radial direction of a circle about the axis M is simply referred to as the radial direction or the R direction, and the circumferential direction of a circle about the axis M is simply referred to as the circumferential direction. Further, unless otherwise specified, the vertical direction indicates the vertical direction in a state where the axis M is arranged in the vertical direction and a mounting surface of the drive module 1 arranged below in the vertical direction.

Next, the respective constitutional parts are explained in detail.

### (Driven body)

The lens frame (driven body) 4 of this embodiment is formed into a cylindrical shape as a whole as shown in Fig. 3, and a cylindrical housing part 4A which penetrates the lens frame 4 along the axis M is formed at the center of the lens frame 4. Female threads are formed on an inner peripheral surface of the housing part 4A (see Fig. 5). To the housing part 4A, a lens unit 12 which includes a lens barrel and a suitable lens or a group of suitable lenses which is/are held inside of the lens barrel is fixed, wherein male threads which are threadedly engaged with the above-mentioned female threads are formed on an outer peripheral portion of the lens barrel.

Projecting portions 4C which project outward in the radial direction are formed on an outer wall surface of the lens frame 4 at intervals of approximately 90 degrees in the circumferential direction in a state where the projecting portions 4c extend in the axis M direction. At upper end portions and lower end portions of these respective projecting portions 4C, on an upper end surface 4a and a lower end surface 4b of the lens frame 4, four upper fixing pins 13Awhich project in the upward direction along the axis M and four lower fixing pins 13B which project in the downward direction along the axis M are formed respectively. Out of these fixing pins, the upper fixing pins 13A are provided for holding the upper plate spring 6, and the lower fixing pins 13B are provided for holding the lower plate spring 7. The lens frame 4 is formed as an integral body using a thermoplastic resin which can be thermally caulked or caulked by ultrasonic waves, for example, using a polycarbonate (PC) resin, a liquid crystal polymer (LCP) resin or the like.

Although positions of the upper fixing pins 13A and positions of the lower fixing pins 13B as viewed in a plan view may differ from each other, in this embodiment, these fixing pins are respectively arranged at coaxial positions in parallel to the axis M. Accordingly, positions where the upper fixing pins 13A are inserted into the upper plate spring 6 and positions where the lower fixing positions 13B are inserted into the lower plate spring 7 are aligned with each other respectively.

Further, although the respective center positions of the upper fixing pins 13A in the radial direction may differ from each other in the radial direction and the respective center positions of the lower fixing pins 13B in the radial direction may differ from each other, in this embodiment, these center positions are arranged on the same circumference. Accordingly, the respective center positions are arranged in a square grid shape.

Further, a guide projection (projecting portion) 4D which projects outward in the radial direction is formed on the outer wall surface of the lens frame 4. The guide projection 4D is formed between the neighboring projecting portions 4C (a position displaced in the circumferential direction by 45 degrees).

As shown in Fig. 4, in the guide projection 4D, the SMA wire 10 is engaged with a distal end hook portion 4D1 of the guide projection 4D and the guide projection 4D is lifted and moved in the upward direction (+Z direction) due to shrinking of the SMA wire 10.

### (Support body)

As shown in Fig. 3, the module frame (support body) 5 is a cylindrical member whose profile is formed into an approximately rectangular shape as a whole as viewed in a plan view, and a housing part 5A which is constituted of a through hole arranged coaxially with the axis M is formed in a center portion of the module frame 5. The lens frame 4 is housed inside of the housing part 5A.

At four corners of an upper portion and at four corners of a lower portion of the module frame 5, an upper end surface 5a and a lower end surface 5b which are formed of a flat surface perpendicular to the axis M are formed respectively. Four upper fixing pins 14A are formed on the upper end surfaces 5a in an upwardly projecting manner, and four lower fixing pins 14B are formed on the lower end surfaces 5b in a downwardly projecting manner. Out of these fixing pins, the upper fixing pins 14A are provided for holding the upper plate spring 6, and the lower fixing pins 14B are provided for holding the lower plate spring 7, the module lower plate 8 and the electricity supply member 9 respectively. The module frame 5 is, in the same manner as the lens frame 4, formed as an integral body using a thermoplastic resin such as a polycarbonate (PC) resin, a liquid crystal polymer (LCP) resin or the like, for example, which can be thermally caulked or caulked by ultrasonic waves.

Positions of the upper fixing pins 14A as viewed in a plan view may differ from the arrangement positions of the lower fixing pins 14B. In this embodiment, however, the upper fixing pin 14A and the lower fixing pin 14B are respectively arranged at coaxial positions in parallel to the axis M. Accordingly, the positions where the upper fixing pins 14A are inserted into the upper plate spring 6 and positions where the lower fixing the positions 14B are inserted into the lower plate spring 7 are aligned with each other respectively. A distance between the upper end surface 5a and the lower end surface 5b is set equal to a distance between the upper end surface 4a and the lower end surface 4b of the lens frame 4.

Two positioning pins 14F which project downward are formed on the lower end surface 5b of the module frame 5. The positioning pins 14F are fitted into positioning holes formed in the lower plate spring 7, the intermediate member 80, the module lower plate 8, and the electricity supply member 9 thus positioning these members.

A notch 5B is formed in a lower portion of one corner of the module frame 5. A groove width of the notch 5B as viewed in a plan view is set to a size which allows the guide projection 4D of the lens frame 4 to be movably fitted in the notch 5B in the axis M direction. The notch 5B is provided for allowing, when the lens frame 4 is inserted and housed in the module frame 5 from below, the guide projection 4D of the lens frame 4 to penetrate the notch 5B and the distal end hook portion 4D1 of the guide projection 4D to project outward in the radial direction of the module frame 5. The notch 5B is also provided for positioning the lens frame 4 in the circumferential direction.

### (Drive means)

As shown in Fig. 4, the wire holding members 15 (15A, 15B) are fixed to two side surfaces of the module frame 5 arranged adjacent to the notch 5B.

To explain the drive means more specifically, reference pins 34 (34A, 34B) and rotation stopper pins 35 (35A, 35B) are formed in parallel on the side surface of the module frame 5. The reference pin 34 is formed into a circular shape as viewed in a front view. The rotation stopper pin 35 is formed such that an upper side and a lower side of the rotation stopper pin 35 are formed into an approximately arcuate shape as viewed in a front view, and a left side and a right side of the rotation stopper pins 35 are formed into an approximately straight-line shape.

The wire holding member 15 is formed of a metal plate or the like having conductivity. In the wire holding member 15, a reference hole 36 (36A, 36B) into which the reference pin 34 of the module frame 5 is fitted and a rotation stopper hole 37 (37A, 37B) into which the rotation stopper pin 35 is fitted are formed. The reference hole 36 is formed into a circular shape as viewed in a front view, and the rotation stopper hole 37 is formed into an approximately quadrangular shape.

Further, by fitting the reference pin 34 into the reference hole 36, the wire holding member 15 can be positioned with respect to the module frame 5 in the radial direction of the reference pin 34. Further, by fitting the rotation stopper pin 36 into the rotation stopper hole 37, an upper end portion and a lower end portion of the rotation stopper pin 36 are brought into point contact with an upper side and a lower side of the rotation stopper pin 37 respectively. Due to such a constitution, the wire holding member 15 can be positioned in the circumferential direction of the reference pin 34. Accordingly, the wire holding member 15 can be accurately positioned in the respective directions with respect to the module frame 5. Left and right sides of the rotation stopper pin 35 are linearly cut away and hence, even when there exist irregularities in a distance between the reference pin 34 and the rotation stopper pin 35 or a distance between the reference hole 36 and the rotation stopper hole 37, it is possible to fit the rotation stopper pin 36 into the rotation stopper hole 37.

After fitting the reference pin 34 and the rotation stopper pin 35 into the reference hole 36 and the rotation stopper hole 37 respectively, profiles of the head portions of the respective pins are made larger than profiles of the reference hole 36 and the rotation stopper hole 37 by thermally caulking head portions of the reference hole 36 and the rotation stopper hole 37. Due to such a constitution, the wire holding member 15 is fixedly mounted on the module frame 5.

The wire holding member 15 includes a terminal portion 15a which is connected to the electricity supply member 9, and wire holding portion 15b which holds the SMA wire 10. The wire holding portions 15b holds an end portion of the SMA wire 10 by caulking the metal plate in a hook shape.

Both end portions of the SMA wire 10 are held by the pair of wire holding members 15A, 15B. The SMA wire 10 is a member which is provided for driving the lens frame 4 in the axis M direction against a biasing force of the coil spring 34 by applying a generated force to the guide projection 4D which projects from the lens frame 4.

To explain the constitution of the SMA wire 10 more specifically, an intermediate portion of the SMA wire 10 is engaged with the distal end hook portion 4D1 of the guide projection 4D of the lens frame 4 which projects from the notch 5B formed in the module frame 5 from below. That is, the SMA wire 10 is fixed to the module frame 5 in a state where the intermediate portion of the SMA wire 10 is engaged with the distal end hook portion 4D1 of the guide projection 4D and both end portions of the SMA wire 10 face each other in an opposed manner with the axis M sandwiched therebetween by way of the wire holding members 15A, 15B. Further, the SMA wire 10 plays a role of driving the lens frame 4 in the axis M direction in such a manner that the SMA wire 10 shrinks by heat generated when electricity is supplied to the SMA wire 10 through the electricity supply member 9 and a generated tension is applied to the guide projection 4D.

### (Plate spring member)

As shown in Fig. 3 and Fig. 4, on an upper portion and a lower portion of the module frame 5 and on an upper portion and a lower portion of the lens frame 4 which is inserted into the inside of the module frame 5, the upper plate spring 6 and the lower plate spring (plate spring member) 7 are stacked respectively. In this embodiment, the upper plate spring 6 and the lower plate spring 7 are respectively formed of a plate-shaped plate spring member formed by blanking and have the same shape as viewed in a plan view. The upper plate spring 6 and the lower plate spring 7 are, formed of a metal plate such as a stainless steel (SUS) plate, for example.

With respect to a shape of the upper plate spring 6 (lower plate spring 7), a profile of the upper plate spring 6 (lower plate spring 7) as viewed in a plan view is formed into a substantially rectangular shape similar to a profile of the upper end portion (lower end portion) of the module frame 5. A circular opening 6C (7C) which is slightly larger than the housing part 4A of the lens frame 4 is formed in a center portion of the upper plate spring 6 (lower plate spring 7) coaxially with the axis M. Due to such a constitution, the upper plate spring 6 (lower plate spring 7) is formed into a ring shape as a whole.

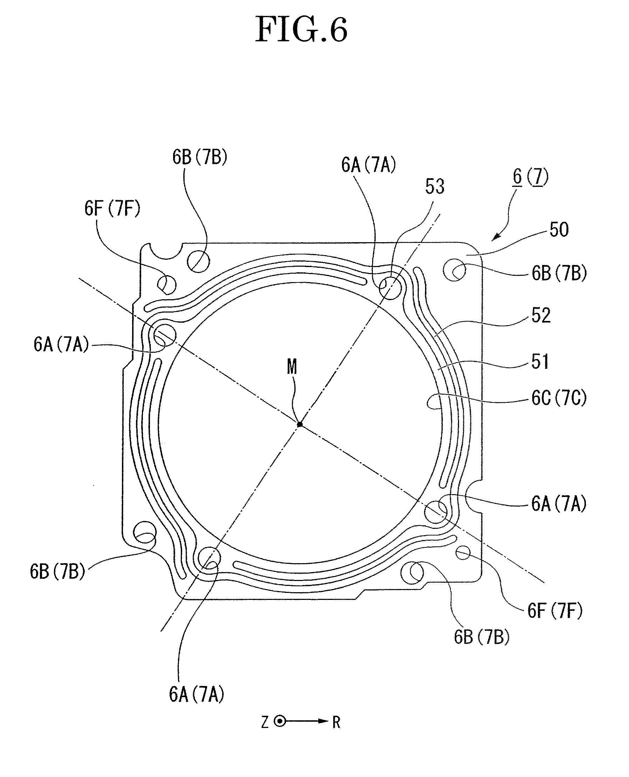

Fig. 6 is a plan view of the upper plate spring 6 (lower plate spring 7). The upper plate spring 6 (lower plate spring 7) is mainly constituted of a frame-shaped frame body portion (second connection portion) 50 which is connected to the upper end surface 5a (lower end surface 5b) of the module frame 5, a ring portion (first connection portion) 51 which is connected to the upper end surface 4a (lower end surface 4b) of the lens frame 4 in a state where the ring portion 51 is arranged radially inside the frame body portion 50, and a spring portion 52 which has both end portions thereof connected to the frame body portion 50 and the ring portion 51 respectively and connects the frame body portion 50 and the ring portion 51 to each other.

In the vicinity of corner portions of the frame body portion 50, four through holes 6B (7B) which allow the insertion of respective upper fixing pins 14A (lower fixing pins 14B) therethrough are formed corresponding to arrangement positions of the upper fixing pins 14A (lower fixing pins 14B) which are formed in the vicinity of the corner portions of the module frame 5. Further, in both end portions on one diagonal line of the approximately rectangular frame body portion 50, a pair of positioning holes 6F (7F) into which the pair of positioning pins 14F of the module frame 5 is fitted is formed. Due to such a constitution, the upper plate spring 6 (lower plate spring 7) can be positioned with respect to the module frame 5 within a plane orthogonal to the axis M.

The ring portion 51 includes four bulging portions 53 which bulge outward in the radial direction from an outer periphery of the ring portion 51. The respective bulging portions 53 are arranged in the circumferential direction of the ring portion 51 at equal angular intervals. In each bulging portion 53, a through hole 6A (7A) which allows the insertion of the upper fixing pin 13A (lower fixing pin 13B) therethrough is formed corresponding to an arrangement position of the upper fixing pin 13A (lower fixing pin 13B) formed on the lens frame 4.

As described above, the through holes 6B (7B), the positioning holes 6F (7F) and the through holes 6A (7A) are formed in the vicinity of the corner portions of the upper plate spring 6 (lower plate spring 7) where enough spaces for forming these holes are ensured and hence, it is possible to miniaturize the profile of the drive module. Further, the through hole 6B (7B), the positioning hole 6F (7F) and the through hole 6A (7A) are arranged in different phases from each other and hence, it is possible to extremely miniaturize the profile of the drive module.

Each spring portion 52 is formed into an approximately quadrant arc shape, and is arranged between the ring portion 51 and the frame body portion 50. One end portion of the spring portion 52 is connected to the ring portion 51 at the bulging portion 53, and the other end of the spring portion 52 is connected to the frame body portion 50 in the vicinity of the neighboring bulging portion 53.

### (Module lower plate, intermediate member)

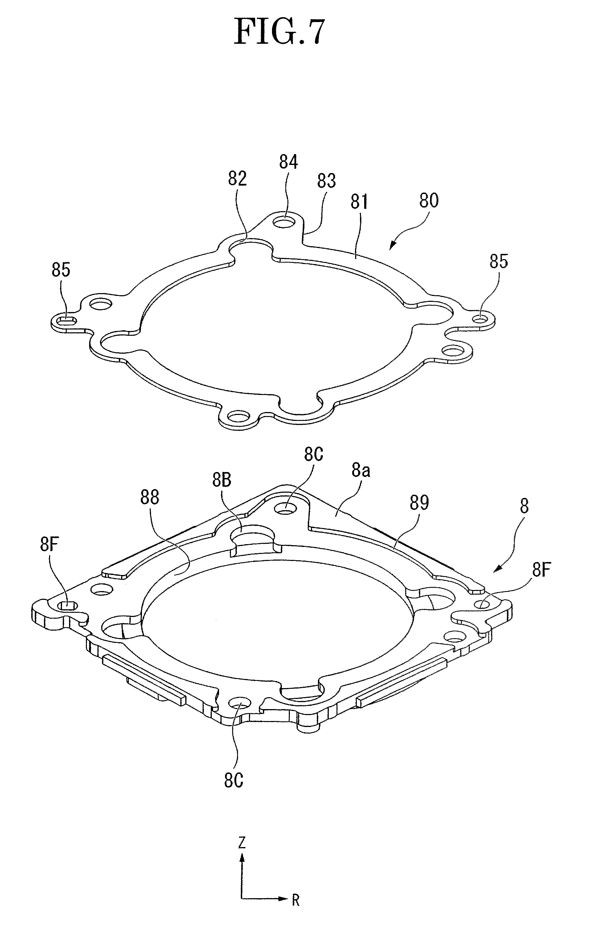

Fig. 7 is a perspective view of the module lower plate 8 and the intermediate member 8. The module lower plate 8 is made of a resin material having electrical insulation property and light blocking property. A profile of the module lower plate 8 is formed into an approximately rectangular shape in the same manner as the module frame 5. An opening portion 88 having a size which allows the insertion and retraction of the lens unit 12 therethrough is formed in the center of the module lower plate 8.

In four corners of the module lower plate 8, a through hole 8C into which the lower fixing pin 14B of the module frame 5 is inserted and a recessed portion 8B which is provided for avoiding the interference between the module lower plate 8 and the lower fixing pin 13B of the lens frame 4 are formed. Further, on both end portions on one diagonal line of the approximately rectangular-shaped module lower plate 8, a pair of positioning holes 8F into which the pair of positioning pins 14F of the module frame 5 is fitted is formed.

The intermediate member 80 is formed into a planar ring shape and, as shown in Fig. 3, is arranged between the lower plate spring 7 and the module lower plate 8. A thickness of the intermediate member 80 is set larger than a thickness of the lower plate spring 7. Further, the intermediate member 80 is formed such that hardness of the intermediate member 80 is set closer to hardness of the lower plate spring 7 than hardness of the module lower plate 8 is. In this embodiment, while the module lower plate 8 is made of a resin material, both the intermediate member 80 and the lower plate spring 7 are made of a metallic material such as stainless steel. That is, the hardness of the intermediate member 80 is set equal to the hardness of the lower plate spring 7 and is set higher than the hardness of the module lower plate 8. Here, hardness of the each member can be defined in accordance with Rockwell hardness stipulated in Japanese Industrial Standards (JIS) G0202.

Returning to Fig. 7, the intermediate member 80 includes a ring portion 81, and a plurality of bulging portions 83 which bulge outward in the radial direction from an outer periphery of the ring portion 81. Notched portions 82 are formed in the ring portion 81 for avoiding the interference between the intermediate member 80 and the lower fixing pins 13B of the lens frame 4. In each bulging portion 83, a through hole 84 into which the lower fixing pin 14B of the module frame 5 is fitted and a positioning hole 85 into which the positioning pin 14F of the module frame 5 is inserted are formed. The intermediate member 80 of this embodiment includes, in the same manner as the lower plate spring 7 and the module lower plate 8, the positioning holes 85 into which the positioning pins 14F are inserted and hence, the positioning of the intermediate member 80 in the radial direction as well as in the circumferential direction with respect to the module frame 5 can be performed in the same manner as the lower plate spring 7 and the module lower plate 8.

As shown in Fig. 5, the lower fixing pins 14B of the module frame 5 penetrate the lower plate spring 7, the intermediate member 80, the module lower plate 8 and the electricity supply member 9. By thermally caulking the head portions 19 of the lower fixing pins 14B, the lower plate spring 7, the intermediate member 80, the module lower plate 8 and the electricity supply member 9 are fixed to the module frame 5. Further, the head portions 18 of the lower fixing pins 13B of the lens frame 4 are thermally caulked after the lower fixing pins 13B penetrate the lower plate spring 7. The interference between the head portion 18 of the lower fixing pin 13B and the intermediate member 80 and the module lower plate 8 is avoided by the notched portion 82 formed in the intermediate member 80 and the recessed portions 8B formed in the module lower plate 8.

Returning to Fig. 7, the intermediate member 80 is arranged inside a sunken portion 89 which is formed on a surface of the module lower plate 8. Due to such a constitution, even when the intermediate member 80 is adopted, it is possible to avoid the drive module from becoming large-sized. Further, a depth of the sunken portion 89 is set equal to or more than a thickness of the intermediate member 80. Due to such a constitution, the intermediate member 80 is arranged inside the module lower plate 8 and hence, the lower plate spring 7, the intermediate member 80 and the module lower plate 8 can be fixed to the module frame 5 in a state where the lower plate spring 7 is brought into contact with the surface 8a of the module lower plate 8. Accordingly, even when the intermediate member 80 is adopted, it is possible to ensure accuracy in a height size of the drive module.

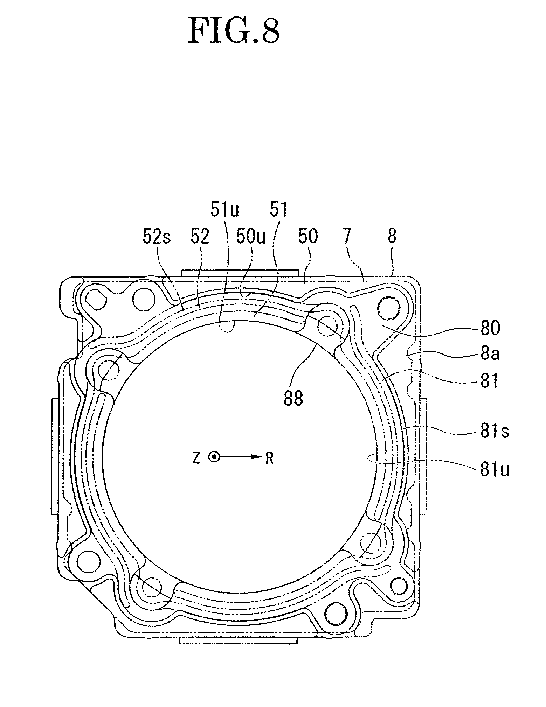

Fig. 8 is a plan view showing a state where the intermediate member 80 and the module lower plate 8 overlap with each other. In Fig. 8, a profile of the lower plate spring 7 is indicated by a double-dashed chain line.

An inner diameter 81 u of the ring portion 81 of the intermediate member 80 is set substantially equal to an inner diameter 51 u of the ring portion 51 of the lower plate spring 7 and an inner diameter of the opening portion 88 of the module lower plate 8. Further, an outer diameter 81 s of the ring portion 81 of the intermediate member 80 is set equal to or larger than an outer diameter 52s of the spring portion 52 of the lower plate spring 7. Due to such a constitution, even when an impact force in the Z direction acts on the drive module so that the spring portion 52 of the lower plate spring 7 is displaced in the Z direction, it is possible to allow the spring portion 52 to impinge on the intermediate member 80 thus preventing the spring portion 52 from impinging on the module lower plate 8. The outer diameter 81 s of the ring portion 81 of the intermediate member 80 is desirably set equal to or larger than the inner diameter 50u of the frame body portion 50 of the lower plate spring 7. Due to such a constitution, even when an impact force acts on the drive module in the R direction so that the spring portion 52 of the lower plate spring 7 is displaced in the R direction, it is possible to allow the spring portion 52 to impinge on the intermediate member 80 thus preventing the spring portion 52 from impinging on the module lower plate 8.

The electricity supply member 9 is constituted of a pair of electrodes 9a, 9b which are formed of a metal plate. Each electrode 9a, 9b includes an approximately L-shaped wiring portion 9B which extends along the profile of the module lower plate 8, a terminal portion 9C which projects downward from an end portion of the wiring portion 9B below the module lower plate 8, and a conductive connection portion 9D which is electrically connected to the terminal portion 15a of the wire holding member 15A. As an electrical connection means between the terminal portion 15a of the wire holding member 15A and the conductive connection portion 9D, soldering, adhesion using a conductive adhesive agent or the like can be adopted.

Through holes 9A are formed in each wiring portion 9B. The through holes 9A are holes which allow, out of the lower fixing pins 14B of the module frame 5 which project downward from the lower surface of the module lower plate 8, two lower fixing pins 14B which are arranged adjacent to each other along the profile of the module lower plate 8 to penetrate therethrough.

### (Manner of operation of drive module)

Next, the manner of operation of the drive module 1 is explained in conjunction with Fig. 2.

In a state where electricity is not supplied to the electricity supply member 9, only a biasing force from the coil spring 34 acts on the lens frame 4. Here, the movement of the lens frame 4 in the -Z direction is restricted by the module lower plate 8.

When the standby electricity is supplied to the electricity supply member 9, the SMA wire 10 is heated to a predetermined temperature so that the SMA wire 10 shrinks. Accordingly, the lens frame 4 moves in the +Z direction and stops at a predetermined position (standby position) where a tension of the SMA wire 10 and a biasing force of the coil spring 34 are balanced.

When driving electricity is supplied to the electricity supply member 9, the SMA wire 10 generates heat corresponding to an amount of electricity and extends or shrinks. Accordingly, the lens frame 4 can be moved in the Z direction to a position where a tension of the SMA wire 10 and a biasing force of the coil spring 34 are balanced.

That is, when electricity is supplied to the electricity supply member 9, an electric current flows in the SMA wire 10 so that Joule heat is generated whereby a temperature of the SMA wire 10 is elevated. When the temperature of the SMA wire 10 exceeds a transformation start temperature, the SMA wire 10 shrinks to a length corresponding to the temperature. The SMA wire 10 has both end portions thereof fixed to the module frame 5 by way of the wire holding members 15A, 15B and has the intermediate portion thereof engaged with the guide projection 4D and hence, a generated force (drive force) is applied to the guide projection 4D due to shrinkage so that the SMA wire 10 can move the guide projection 4D upwardly (in the Z1 direction indicated by an arrow in Fig. 4 and Fig. 5) along the axis M direction.

When the lens frame 4 moves, the coil spring 34 is deformed and a resilient restoring force corresponding to an amount of deformation is applied to the lens frame 4. The movement of the lens frame 4 is stopped at a position where this resilient restoring force and a tension of the SMA wire 10 are balanced. By adjusting a quantity of electricity to the electricity supply member 9 thus controlling a heat generation quantity of the SMA wire 10, the lens frame 4 can be moved in the ±Z directions and can be stopped at a predetermined position.

### (Manner of operation)

Next, the manner of operation of the drive module according to this embodiment is explained.

When an electronic apparatus falls or the like, an impact force acts on the drive module mounted on the electronic apparatus. When the impact force acts in the Z direction, as shown in Fig. 18(a), firstly the lens frame 4 moves in the +Z direction. Next, when a restoring force from the coil spring or the like acts on the lens frame 4, as shown in Fig. 18(b), the lens frame 4 moves in the -Z direction so that the lower plate spring 7 impinges on the module lower plate 8.

In the drive module of the prior art, the lower plate spring 7 made of a hard metallic material impinges on the module lower plate 8 made of a soft resin material. Accordingly, there exists a drawback that the lower plate spring 7 shaves the module lower plate 8 thus generating shaving debris. Because of this shaving debris, quality of an image picked up by a camera of the electronic apparatus is lowered or a smooth operation of the drive module is obstructed.

Further, when the lens frame 4 and the lower plate spring 7 impinge on the module lower plate 8 in an inclined state, there arises a drawback that the stress concentration occurs so that the module lower plate 8 is plastically deformed. In this case, when the lens frame 4 is brought into indirect contact with the surface 8a of the module lower plate 8, a stationary position of the lens frame 4 is displaced or is inclined.

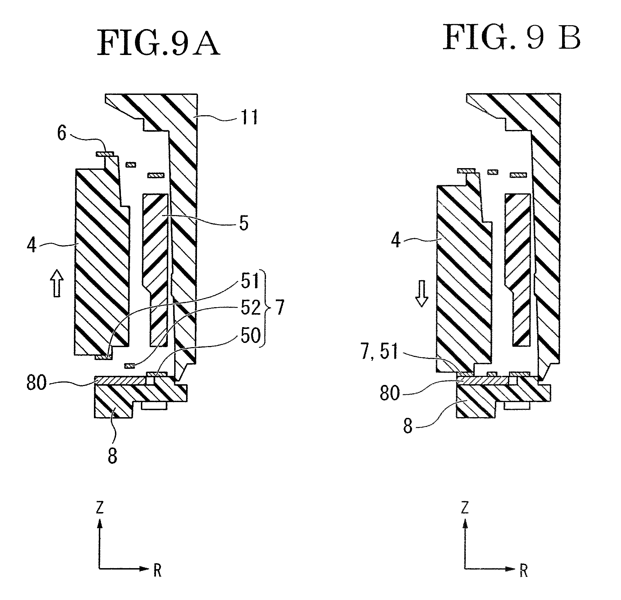

Fig. 9 is an explanatory view of the manner of operation of the drive module according to the first embodiment. In the drive module according to this embodiment, the intermediate member 80 is arranged between the lower plate spring 7 and the module lower plate 8 and hence, when the lens frame 4 moves from a state where the lens frame 4 is moved in the +Z direction as shown in Fig. 9(a) to a state where the lens frame 4 is moved in the -Z direction as shown in Fig. 9(b), the lower plate spring 7 impinges on the intermediate member 80. In the drive module according to this embodiment, the intermediate member 80 is formed such that the hardness of the intermediate member 80 is set closer to the hardness of the lower plate spring 7 than the hardness of the module lower plate 8 is so that the difference in hardness between the lower plate spring 7 and the intermediate member 80 is set small. Accordingly, even when the lower plate spring 7 impinges on the intermediate member 80, there is almost no possibility that the intermediate member 80 is shaved by the lower plate spring 7. Accordingly, the generation of shaving debris can be suppressed. Further, a plastic deformation amount of the intermediate member 80 can be small and hence, a change in a stationary position of the lens frame 4 can be suppressed.

Particularly, in this embodiment, the lower plate spring 7 and the intermediate member 80 are made of the same metallic material. Accordingly, even when the lower plate spring 7 impinges on the intermediate member 80, there is no possibility that the intermediate member 80 is shaved by the lower plate spring 7. Accordingly, the generation of shaving debris can be prevented. Further, the deformation of the intermediate member 80 can be also prevented and hence, a change in a stationary position of the lens frame 4 when the lens frame 4 is brought into indirect contact with the module lower plate 8 can be prevented.

The module lower plate 8 made of the resin material has a drawback that an edge of the module lower plate 8 is liable to be caught by an object around the module lower plate 8 so that the edge is easily shaved. Particularly, a liquid crystal polymer (LCP) which is generally used for forming the module lower plate 8 of a camera module is aligned in the flow direction so that the liquid crystal polymer exhibits a property of easily being torn in the aligned direction. To the contrary, in the present invention, the intermediate member made of a metallic material is adopted and hence, even when the intermediate member impinges on the plate spring member made of a metallic material, both members slide each other whereby the intermediate member is hardly shaved. Even if the intermediate member 80 is shaved, shaving debris hardly falls compared to a case where the intermediate member is made of a resin. Accordingly, the generation of shaving debris can be prevented.

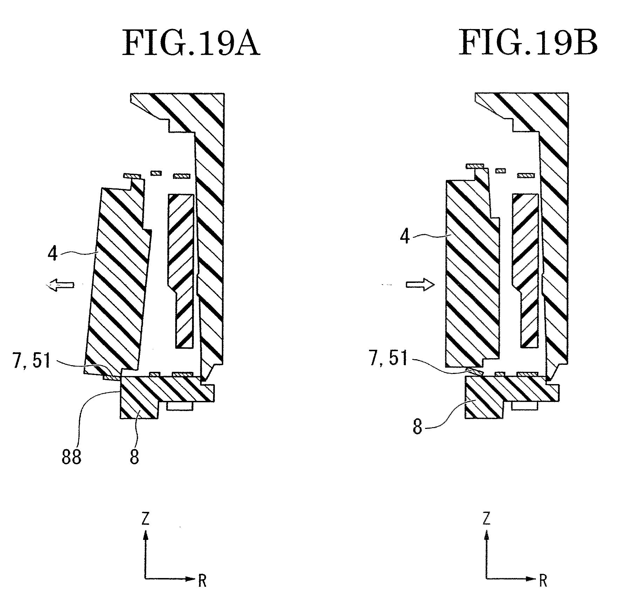

On the other hand, when an impact force acts in the R direction as shown in Fig. 19(a), the lens frame 4 moves in the R direction. Here, there may be a case where an outer peripheral side of the ring portion 51 of the lower plate spring 7 fixed to the lens frame 4 is brought into contact with an inner peripheral side of an opening portion 88 of the module lower plate 8. In such a case, in a drive module of the prior art, the ring portion 51 of the lower plate spring 7 made of a hard metallic material cuts into the module lower plate 8 made of a soft resin material so that the ring portion 51 is brought into a caught state. Accordingly, in a process where the lens frame 4 returns to a +Z side of the module lower plate 8 shown in Fig. 19(b), the ring portion 51 is peeled from a surface of the lens frame 4 on a -Z side of the lens frame 4 thus giving rise to a drawback that the ring portion 51 is plastically deformed. In this case, a stationary position of the lens frame 4 is displaced or inclined.

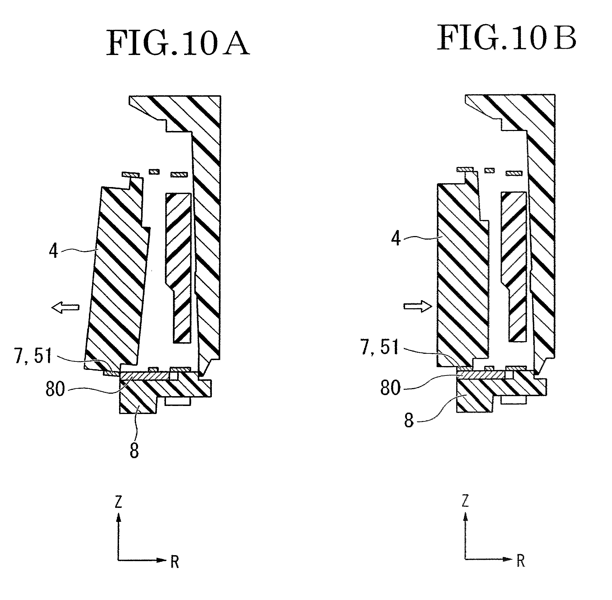

Fig. 10 is an explanatory view for explaining the manner of operation of the drive module according to the first embodiment. In this embodiment, the difference in hardness between the lower plate spring 7 and the intermediate member 80 is set small. Accordingly, as shown in Fig. 10(a), even when the ring portion 51 of the lower plate spring 7 is brought into contact with the intermediate member 80, there is no possibility that the ring portion 51 cuts into the intermediate member 80. Accordingly, in a process where the lens frame 4 returns to the +Z side of the module lower plate 8 shown in Fig. 10(b) from such a state, the ring portion 51 moves while sliding on a surface of the intermediate member 80 and hence, plastic deformation of the ring portion 51 can be prevented. Accordingly, the lower plate spring 7 can also return to an original state together with the lens frame 4 and hence, a change in stationary position of the lens frame 4 when the lens frame 4 is brought into indirect contact with the module lower plate 8 can be prevented.

Particularly, in this embodiment, a thickness of the intermediate member 80 is set larger than a thickness of the lower plate spring 7. Accordingly, a possibility that the ring portion 51 of the lower plate spring 7 is brought into contact with the intermediate member 80 becomes large, while a possibility that the ring portion 51 is brought into contact with the module lower plate 8 becomes small. Due to such a constitution, although the ring portion 51 is brought into contact with the intermediate member 80, the ring portion 51 is not brought into contact with the module lower plate 8. Accordingly, the plastic deformation of the ring portion 51 can be prevented and hence, a change in a stationary position of the lens frame 4 when the lens frame 4 is brought into indirect contact with the module lower plate 8 can be prevented.

### (Second embodiment)

Next, a drive module according to the second embodiment is explained.

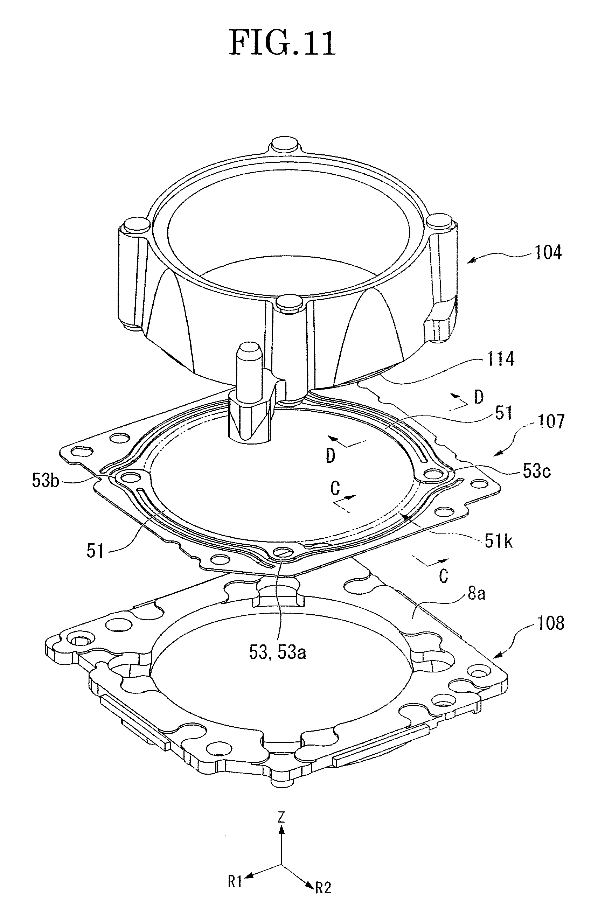

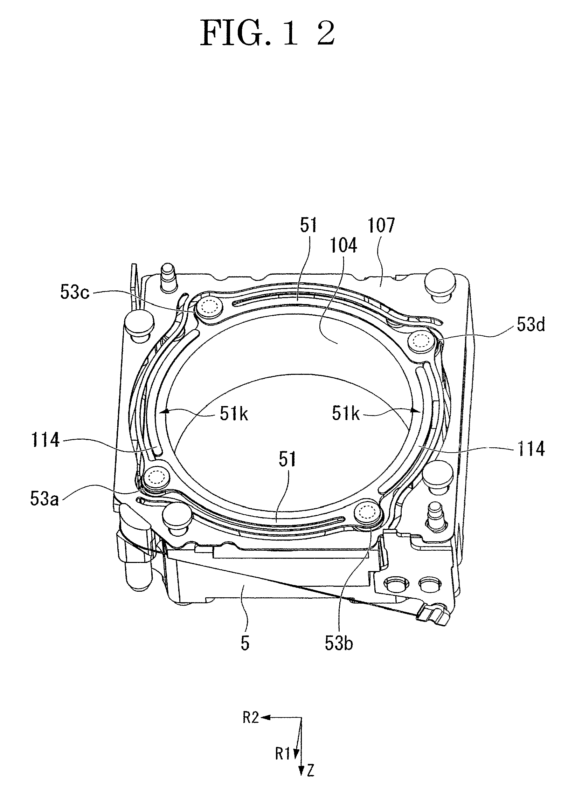

Fig. 11 is an exploded perspective view of a lens frame 104, a lower plate spring 107 and a module lower plate 108. Fig. 12 is a perspective view showing a state where the lower plate spring 107 is mounted on the lens frame 104 and a module frame 5 as viewed from below. As shown in Fig. 11, the drive module according to the second embodiment differs from the drive module according to the first embodiment with respect to a point that a broken region 51 k is formed in a ring portion 51 of the lower plate spring 107, and projections 114 which are capable of coming into contact with the module lower plate 108 are formed upright on a -Z side surface of the lens frame 104. The detailed explanation of parts having the identical constitution as corresponding parts in the first embodiment is omitted.

As shown in Fig. 11, the lower plate spring 107 of the second embodiment has four bulging portions 53 in the same manner as the first embodiment. However, while a ring portion 51 exists between one bulging portion 53a and a bulging portion 53b arranged adjacent to one side of the bulging portion 53a, a ring portion is cut off between the bulging portion 53a and a bulging portion 53c arranged adjacent to the other side of the bulging portion 53a thus forming the broken region 51 k. That is, the neighboring bulging portions 53 are connected to each other by the ring portion 51 in the ± R1 direction, and the broken region 51 k is formed between the neighboring bulging portions 53 in the ±R2 direction.

Since the second embodiment does not adopt an intermediate member, a sunken portion into which the intermediate member is fitted is not formed on a surface of the module lower plate 108.

The projections 114 may be formed integrally with the lens frame 104 or may be formed such that the projections 114 is formed as a body separate from the lens frame 104 and is fixedly mounted on the lens frame 104. Hardness of the projections 114 is set closer to hardness of the module lower plate 108 than hardness of the lower plate spring 107 is. In this embodiment, the lens frame 104 and the projections 114 are formed as an integral body using a resin material. The module lower plate 108 is also made of a resin material, and the lower plate spring 107 is made of a metallic material. Accordingly, hardness of the projections 114 is equal to the hardness of the module lower plate 108, and is lower than the hardness of the lower plate spring 107.

The projections 114 are formed so as to penetrate the lower plate spring 107 in opening regions of the lower plate spring 107. Particularly, in this embodiment, the projections 114 are formed in the broken regions 51 k of the lower plate spring 107.

As shown in Fig. 12, the projection 114 is formed in the substantially whole broken region 51 k. That is, the neighboring bulging portions 53 are connected to each other by the ring portion 51 in the ± R1 direction, and the projection 114 is formed between the neighboring bulging portions 53 in the ±R2 direction.

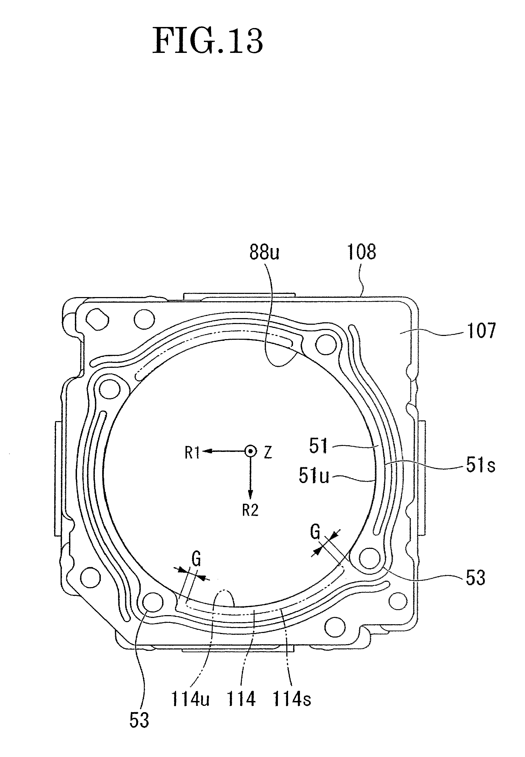

Fig. 13 is a plan view showing a state where the lower plate spring 107 and the module lower plate 108 overlap with each other. In Fig. 13, a profile of the projection 114 formed on the lens frame 104 is indicated by a double-dashed chained line. An inner diameter 114u of the projection 114 is set equal to an inner diameter 51 u of the ring portion 51 of the lower plate spring 7 and an inner diameter of the opening portion 88 of the module lower plate 108. An outer diameter 114s of the projection 114 is set equal to an outer diameter 51 s of the ring portion 51 of the lower plate spring 7. In this manner, by forming the projection 114 in the same manner as the ring portion 51, it is possible to prevent the unexpected interference between the projection 114 and a peripheral member. A gap G between the projection 114 and the bulging portion 53 in the circumferential direction can be arbitrarily set.

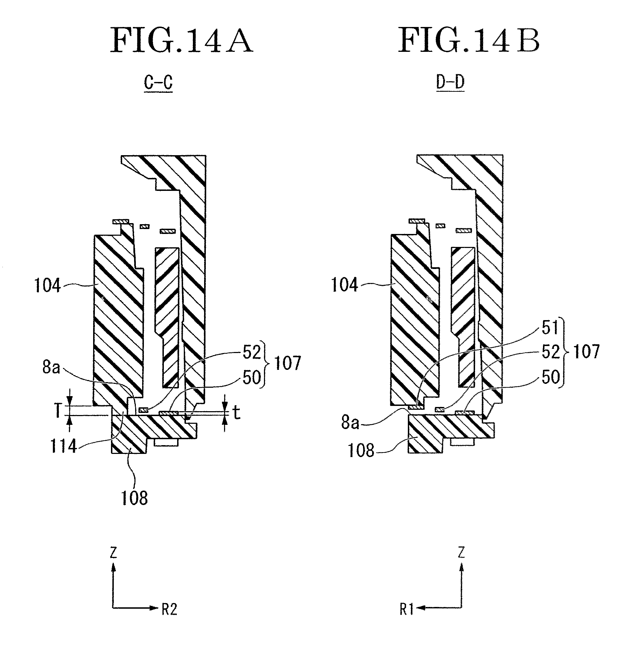

Fig. 14(a) is a cross-sectional view taken along a line C-C in Fig. 11, and Fig. 14(b) is cross-sectional view taken along a line D-D in Fig. 11. As shown in Fig. 14(a), a height T of the projection 114 is set larger than a thickness t of the lower plate spring 107 so that the projection 114 penetrates the lower plate spring 107. Accordingly, the projection 114 is capable of coming into contact with a surface 8a of the module lower plate 108. Along with such a constitution, as shown in Fig. 14(b), the ring portion 51 is configured not to come into contact with the surface 8a of the module lower plate 108.

### (Manner of operation)

Next, the manner of operation of the drive module according to this embodiment is explained.

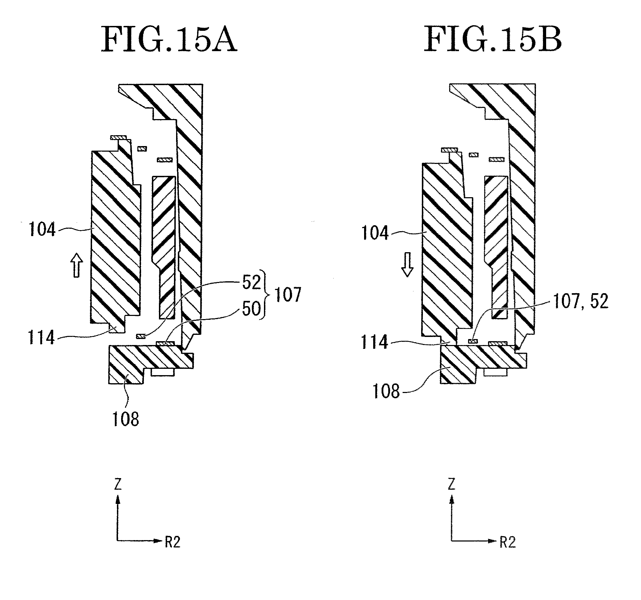

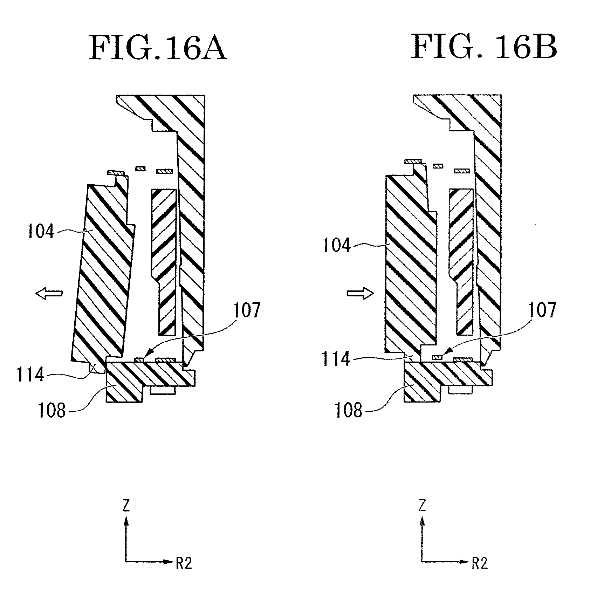

Fig. 15 and Fig. 16 are explanatory views showing the manner of operation of the drive module according to the second embodiment.

When an impact force acts in the Z direction, the lens frame 104 moves in the +Z direction as shown in Fig. 15(a). Thereafter, as shown in Fig. 15(b), the lens frame 104 moves in the -Z direction so that the projection 114 impinges on the module lower plate 108. In this embodiment, the projection 114 is formed such that the hardness of the projection 114 is set closer to the hardness of the module lower plate 108 than the hardness of the lower plate spring 107 is so that the difference in hardness between the projection 114 and the module lower plate 108 is set small and hence, even when the projection 114 impinges on the module lower plate 108, there is almost no possibility that the module lower plate 108 is shaved. Accordingly, the generation of shaving debris can be suppressed.

Further, even when the projection 114 impinges on the module lower plate 108 in an inclined state, a plastic deformation amount of the module lower plate 108 can be small. Accordingly, a change in a stationary position of the lens frame 104 when the lens frame 104 is brought into direct or indirect contact with the module lower plate 108 can be suppressed.

Particularly, in this embodiment, the projections 114 and the module lower plate 108 are made of the same resin material and hence, even when the projection 114 impinges on the module lower plate 108, there is no possibility that the module lower plate 108 is shaved by the projection 114. Accordingly, the generation of shaving debris can be prevented. Further, the deformation of the module lower plate 108 can be also prevented and hence, a change in a stationary position of the lens frame 4 when the lens frame 104 is brought into direct or indirect contact with the module lower plate 108 can be prevented.

In this embodiment, the height of the projection 114 is set larger than the thickness of the lower plate spring 107 and hence, only the projection 114 impinges on the module lower plate 108 as shown in Fig. 14(a) and, as shown in Fig. 14(b), the ring portion 51 of the lower plate spring 107 does not impinge on the module lower plate 108 and hence, the generation of shaving debris can be prevented. Further, a plastic deformation amount of the module lower plate 108 can be also set small and hence, a change in a stationary position of the lens frame 104 when the lens frame 104 is brought into direct or indirect contact with the module lower plate 108 can be prevented.

On the other hand, when an impact force acts in the R2 direction, as shown in Fig. 16(a), the lens frame 104 moves in the R2 direction. In this embodiment, the projection 114 is arranged in the broken region of the ring portion 51 of the lower plate spring 107 and hence, the outer peripheral side of the projection 114 is brought into contact with the inner peripheral side of the opening portion 88 of the module lower plate 108, and the ring portion 51 is not brought into contact with the module lower plate 108. Further, in this embodiment, the difference in hardness between the projection 114 and the module lower plate 108 is set small, in a process where the lens frame 104 returns toward a +Z side of the module lower plate 108 shown in Fig. 16(b), the projection 114 moves while sliding on a surface of the module lower plate 108. Accordingly, the lower plate spring 107 can also return to an original state together with the lens frame 104 and hence, a change in a stationary position of the lens frame 104 can be prevented.

### (Third embodiment)

Next, a drive module of the third embodiment is explained.

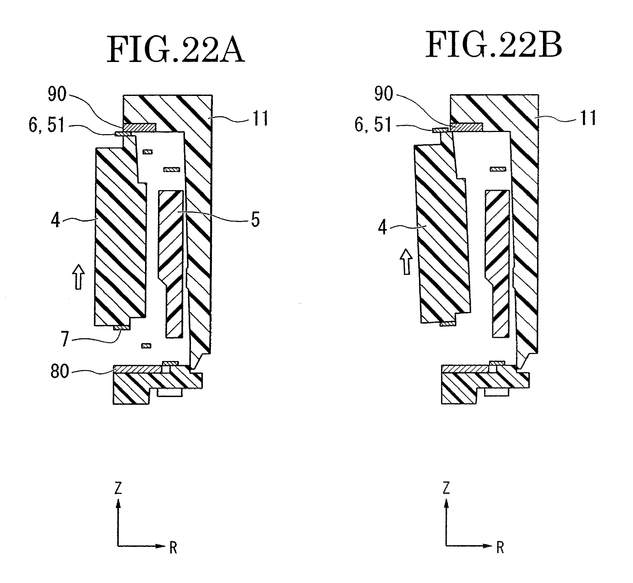

Fig. 22 is an explanatory view showing the manner of operation of the drive module according to the third embodiment. The drive module according to the first embodiment described above includes the module lower plate (restricting member) 8 which restricts the movement of the lower plate spring (plate spring member) 7 in the -Z direction (first direction), and an intermediate member 80 is arranged between the lower plate spring 7 and the module lower plate 8. The drive module according to the third embodiment includes, in addition to the above-mentioned constitution, a cover (restricting member) 11 which restricts the movement of an upper plate spring (plate spring member) 6 in the +Z direction (first direction), and an upper intermediate member (intermediate member) 90 is arranged between the upper plate spring 6 and the cover 11. The detailed explanation of parts having the identical constitution as corresponding parts in the first embodiment is omitted.

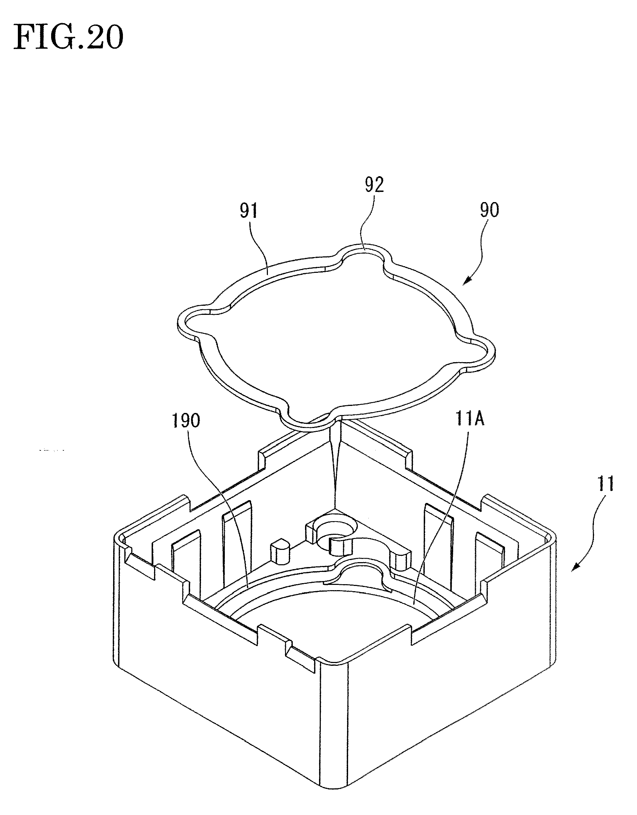

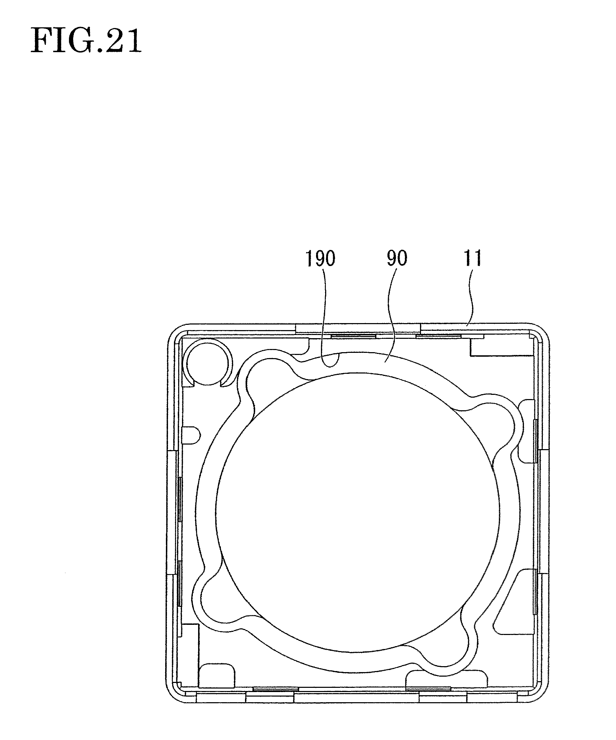

Fig. 20 is a perspective view of the cover 11 and the upper intermediate member 90, and Fig. 21 is a bottom view of the cover 11 and the upper intermediate member 90. As shown in Fig. 20, the upper intermediate member 90 is formed into a planar ring shape and is arranged between the upper plate spring 6 and the cover 11. A thickness of the upper intermediate member 90 is set larger than a thickness of the upper plate spring 6. Further, the upper intermediate member 90 is formed such that a hardness of the upper intermediate member 90 is set closer to a hardness of the upper plate spring 6 than a hardness of the cover 11 is. In this embodiment, while the cover 11 is made of a resin material, both the upper intermediate member 90 and the upper plate spring 6 are made of a metallic material such as stainless steel. That is, the hardness of the upper intermediate member 90 is equal to the hardness of the upper plate spring 6 and is higher than the hardness of the cover 11. Here, hardness of the respective members can be defined in accordance with Rockwell hardness stipulated in Japanese Industrial Standards (JIS) G0202.

The upper intermediate member 90 includes a ring portion 91 having an approximately constant width. An inner diameter of the ring portion 91 of the upper intermediate member 90 is set equal to an inner diameter of an opening 11A of the cover 11, and is set smaller than an outer diameter of the ring portion 51 (see Fig. 6) of the upper plate spring 6. An outer diameter of the ring portion 91 of the upper intermediate member 90 is set larger than an outer diameter of the ring portion 51 (see Fig. 6) of the upper plate spring 6. Due to such a constitution, the ring portion 51 of the upper plate spring 6 which is largely displaced in the +Z direction impinges on only the upper intermediate member 90 and hence, it is possible to prevent the ring portion 51 from impinging on the cover 11. A notched portion 92 which avoids the interference of the ring portion 91 with an upper fixing pin 13A of the lens frame 4(see Fig. 3) is formed on an inner periphery of the ring portion 91. The ring portion 91 is formed continuously while routing around the notched portion 92.

On a back side of an upper surface of the cover 11, a sunken portion 190 is formed around the opening 11A. As shown in Fig. 21, an upper intermediate member 90 is arranged inside the sunken portion 190. A depth of the sunken portion 190 is set equal to or more than a thickness of the upper intermediate member 90. Due to such a constitution, the upper intermediate member 90 is arranged inside the cover 11 and hence, also when the drive module adopts the upper intermediate member 90, it is possible to avoid the large-sizing of the drive module.

### (Manner of operation)

Next, the manner of operation of the drive module according to this embodiment is explained.

Fig. 22 is an explanatory view of the manner of operation of the drive module according to a third embodiment. When a user falls an electronic apparatus or the like, an impact force acts on the drive module mounted on the electronic apparatus. When the impact force acts on the drive module in the Z direction, as shown in Fig. 22(a), there may be a case where the lens frame 4 is largely displaced in the +Z direction. In such a case, according to the drive module of the prior art, the upper plate spring 6 made of a hard metallic material impinges on the cover 11 made of a soft resin material. Accordingly, there exists a drawback that the upper plate spring 6 shaves the cover 11 thus forming shaving debris. Further, when the lens frame 4 and the upper plate spring 6 impinge on the cover 11 in an inclined state, there arises a drawback that the stress concentration occurs so that the cover 11 is plastically deformed.

To the contrary, in the drive module according to this embodiment, the upper intermediate member 90 is arranged between the upper plate spring 6 and the cover 11. Accordingly, as shown in Fig. 22(a), when the lens frame 4 is largely displaced in the +Z direction, the upper plate spring 6 impinges on the upper intermediate member 90. In the drive module according to this embodiment, the upper intermediate member 90 is formed such that the hardness of the upper intermediate member 90 is set closer to the hardness of the upper plate spring 6 than the hardness of the cover 11 is so that the difference in hardness between the upper plate spring 6 and the upper intermediate member 90 is set small. Particularly, in this embodiment, the upper plate spring 6 and the upper intermediate member 90 are made of the same metallic material. Accordingly, even when the upper plate spring 6 impinges on the upper intermediate member 90, there is no possibility that the upper intermediate member 90 is shaved by the upper plate spring 6. Accordingly, the generation of shaving debris can be prevented. There exists no possibility that the upper intermediate member 90 is plastically deformed.

On the other hand, when an impact force also acts on the drive module in the R direction in addition to the Z direction, as shown in Fig. 22(b), the lens frame 4 moves also in the R direction in addition to the +Z direction. In the drive module of the prior art, there may be a case where an outer peripheral side of the ring portion 51 of the upper plate spring 6 fixed to the lens frame 4 is brought into contact with an inner peripheral side of the opening 11A of the cover 11. In such a case, the ring portion 51 of the upper plate spring 6 made of a hard metallic material cuts into the cover 11 made of a soft resin material and is brought into a caught state. Accordingly, in a process where the lens frame 4 returns in the -Z direction from such a state, the ring portion 51 is peeled from a surface of the lens frame 4 on a +Z side thus giving rise to a drawback that the ring portion 51 is plastically deformed.

To the contrary, in the drive module according to this embodiment, the difference in hardness between the upper plate spring 6 and the upper intermediate member 90 is set small. Due to such a constitution, even when an outer peripheral side of the ring portion 51 of the upper plate spring 6 is brought into contact with an inner peripheral side of the upper intermediate member 90, there exists no possibility that the ring portion 51 cuts into the upper intermediate member 90. Accordingly, in a process where the lens frame 4 returns in the -Z direction from such a state, the ring portion 51 moves while sliding on a surface of the upper intermediate member 90 and hence, there exists no possibility that the ring portion 51 is plastically deformed. Accordingly, the upper plate spring 6 can also return to an original state together with the lens frame 4.

Particularly, in this embodiment, the thickness of the upper intermediate member 90 is set larger than the thickness of the upper plate spring 6. Accordingly, a possibility that the outer peripheral side of the ring portion 51 of the upper plate spring 6 is brought into contact with the inner peripheral side of the upper intermediate member 90 becomes large and hence, a possibility that the outer peripheral side of the ring portion 51 is brought into contact with the inner peripheral side of the cover becomes small. Accordingly, the plastic deformation of the ring portion 51 can be prevented as described above.

### (Electronic apparatus)

Next, one embodiment of an electronic apparatus according to the present invention is explained. In this embodiment, the explanation is made by taking a camera equipped mobile phone provided with the drive module 1 of the above-mentioned embodiment as an example of the electronic apparatus.

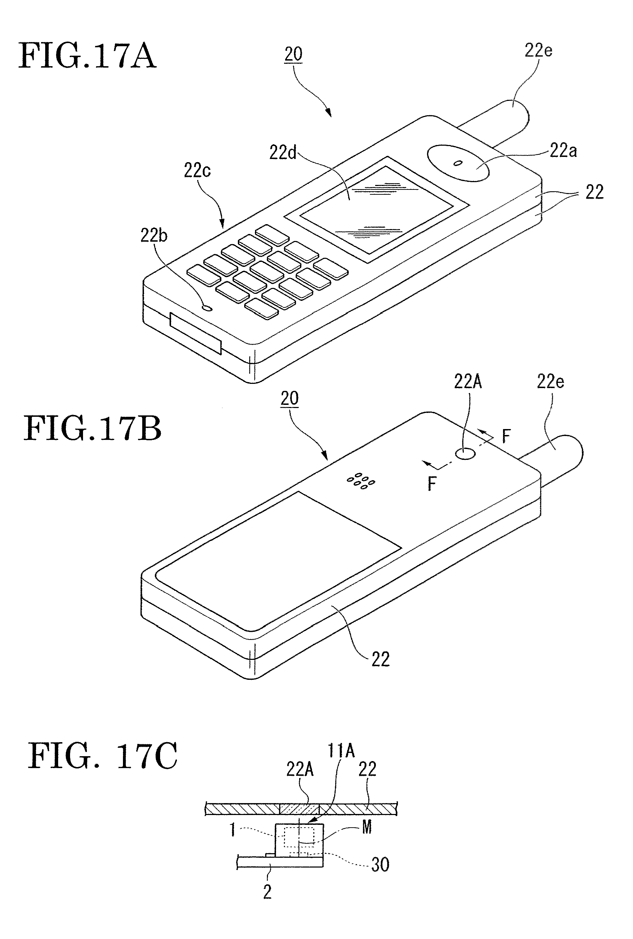

Fig. 17 is an explanatory view of the camera equipped mobile phone 20. Fig. 17(a) is an appearance perspective view showing a front side of the camera equipped mobile phone 20. Fig. 17(b) is an appearance perspective view showing a back side of the camera equipped mobile phone 20. Fig. 17(c) is a cross-sectional view taken along a line F-F in Fig. 17(b). As shown in Fig. 17(a), the camera equipped mobile phone 20 of this embodiment includes a receiver part 22a, a transmitter part 22b, a manipulation part 22c, a liquid crystal display part 22d, an antenna part 22e and a well-known electronic part of the mobile phone such as a control circuit part not shown in the drawing inside and outside a cover 22.

As shown in Fig. 17(b), a window 22A which allows an external light to pass therethrough is formed on the cover 22 on a back surface side opposite to a side where the liquid crystal display part 22d is mounted.

As shown in 17(c), an opening 11A of the drive module 1 faces the window 22A of the cover 22, and the drive module 1 is mounted such that an axis M of the drive module 1 is aligned with the normal direction of the window 22A. The drive module 1 is mechanically and electrically connected to the substrate 2. The substrate 2 is connected to the control circuit part not shown in the drawing, and can supply electricity to the drive module 1.

Due to such a constitution, lights which pass through the window 22A are collected by the lens unit 12 not shown in the drawing in the drive module 1 whereby an image is formed on an imaging element 30. By supplying suitable electricity to the drive module 1 from the control circuit part, the lens unit 12 is driven in the axis M direction so that the focal position adjustment is performed whereby imaging can be performed.

Particularly, the camera equipped mobile phone 20 according to the present invention includes the drive module which can suppress the generation of shaving debris inside thereof and hence, the camera can pick up a high quality image. Accordingly, it is possible to provide a camera equipped mobile phone 20 having high reliability in operation.

The technical scope of the present invention is not limited to the above-mentioned embodiments, and various modifications may be added without departing from the gist of the present invention.

For example, the above-mentioned embodiments adopt the constitution where the lens frame 4 is driven in the axis M direction by applying a generated force to the guide projection 4D by making use of the SMA wire 10. However, the present invention is not limited to such a case, and the lens frame 4 may be driven by making use of a solenoid, a piezoelectric actuator or the like as an actuator.

Further, in the above-mentioned embodiments, the explanation has been made with respect to the case where the upper fixing pins 13A, 14A, the lower fixing pins 13B, 14B are inserted into the upper plate spring 6 and the lower plate spring 7 which constitute the plate spring members, and the distal end portions of the fixing pins are thermally caulked. However, a method of fixing the plate spring members is not limited to such a method. For example, the plate spring members may be fixed by ultrasonic caulking or the like, or the plate spring members may be adhered to the lens frame 4 and the module frame 5. In this case, the plate spring members can ensure a large adhesion area and hence, the plate spring members can acquire large strength even when an adhesive agent is used.

Further, in the above-mentioned embodiment, the explanation has been made with respect to the case where the module frame 5 is formed of an approximately rectangular shaped member as a whole. However, the module frame 5 is not limited to the approximately rectangular shape and may be formed into a polygonal shape.

Further, in the above-mentioned embodiments, the explanation has been made with respect to a case where the drive module 1 is used as the focal position adjusting mechanism of the lens unit 12. However, the application of the drive module 1 is not limited to such a case, and the drive module 1 may be used in other parts as a proper actuator for moving a driven body to a target position. For example, the drive module 1 may be used as a proper actuator by threadedly engaging a rod member or the like in place of the lens unit 12 or changing the lens frame 4 into other shapes. That is, the driven body is not limited to the cylindrical member and may be formed of a columnar member.

Further, in the above-mentioned embodiments, as the electronic apparatus which uses the drive module 1, the explanation has been made with respect to a case where the camera equipped mobile phone 20 is used as an example. However, a kind of electronic apparatus is not limited to such a mobile phone 20. For example, the drive module 1 may be used in an optical apparatus such as a digital camera or a camera built in a personal computer. Also in an electronic apparatus such as an information reading and storing device or a printer, the drive module 1 may be used as an actuator which moves the driven body to a target position.

### Industrial applicability

The present invention is preferably applicable to a drive module where a driven body is held in a movable manner by a plate spring member.

### Explanation of symbols

1: drive module, 4: lens frame (driven body), 5: module frame (support body), 6: upper plate spring (plate spring member), 7: lower plate spring (plate spring member), 8: module lower plate (restricting member), 10: SMA wire (drive means), 11: cover (restricting member), 14F: positioning pin, 20: camera equipped mobile phone (electronic apparatus), 34: coil spring (drive means), 50: frame body portion (first connection portion), 51: ring portion (second connection portion), 52: spring portion, 80: intermediate member, 90: upper intermediate member (intermediate member), 85: positioning hole, 89: sunken portion, 104: lens frame (driven body), 107: lower plate spring (plate spring member), 108: module lower plate (restricting member), 114: projection

## Claims

1. A drive module comprising:
a cylindrical or columnar driven body;
a cylindrical support body which houses the driven body inside thereof;
a plate spring member which is connected to an end surface of the driven body and an end surface of the support body arranged in a first direction, and resiliently holds the driven body in a state where the driven body is movable along the first direction relative to the support body;
a drive means which moves the driven body along the first direction; and
a restricting member which is arranged on a side opposite to the driven body with the plate spring member sandwiched therebetween, and restricts the movement of the driven body and the plate spring member along the first direction, wherein
an intermediate member is arranged between the plate spring member and the restricting member, and
the intermediate member is formed such that hardness of the intermediate member is set closer to hardness of the plate spring member than hardness of the restricting member is.

2. The drive module according to claim 1, wherein the restricting member is made of a resin material, and
the plate spring member and the intermediate member are made of a metallic material.

3. The drive module according to claim 1 or claim 2, wherein the intermediate member is arranged inside of a sunken portion formed in the restricting member.

4. The drive module according to claim 3, wherein a depth of the sunken portion in the first direction is set equal to or more than a thickness of the intermediate member in the first direction.

5. The drive module according to any one of claim 1 to claim 4, wherein the support body includes a positioning pin which is fitted into a positioning hole formed in the plate spring member and a positioning hole formed in the restricting member, and
the intermediate member has a positioning hole into which the positioning pin is fitted.

6. The drive module according to any one of claim 1 to claim 5, wherein a thickness of the intermediate member in the first direction is set larger than a thickness of the plate spring member in the first direction.

7. A drive module comprising:
a cylindrical or columnar driven body;
a cylindrical support body which houses the driven body inside thereof;
a plate spring member which is connected to an end surface of the driven body and an end surface of the support body arranged in a first direction, and resiliently holds the driven body in a state where the driven body is movable along the first direction relative to the support body;
a drive means which moves the driven body along the first direction; and
a restricting member which is arranged on a side opposite to the driven body with the plate spring member sandwiched therebetween, and restricts the movement of the driven body and the plate spring member along the first direction, wherein
the plate spring member comprises: a first connecting portion which is connected to an end surface of the driven body; a second connecting portion which is arranged outside the first connecting portion in a radial direction and is connected to an end surface of the support body; and a plurality of spring portions which connect the first connecting portion and the second connecting portion to each other,
a projection capable of coming into contact with the restricting member is formed upright on an end surface of the driven body in the first direction, and
the projection is formed such that hardness of the projection is set closer to hardness of the restricting member than hardness of the plate spring member is.

8. The drive module according to claim 7, wherein the plate spring member is made of a metallic material, and
the restricting member and the projection are made of a resin material.

9. The drive module according to claim 7 or claim 8, wherein a height of the projection in the first direction is set larger than a thickness of the plate spring member in the first direction.

10. An electronic apparatus comprising the drive module according to any one of claim 1 to claim 9.
